# EUROPEAN PATENT APPLICATION

(11) **EP 3 252 694 A1**
(43) Date of publication of application: **06.12.2017**
(21) Application number: 17173952.7
(22) Date of filing: 01.06.2017
(51) Int. Cl.: G06Q 30/02

(54) **INFORMATION COLLECTING SYSTEM, SERVER, AND CONTROL PROGRAM**

(30) Priority: 02.06.2016 JP 2016111235
(71) Applicant: Toshiba TEC Kabushiki Kaisha, Tokyo 141-0032 (JP)
(72) Inventor: SANBE, Masanori, Shinagawa-ku, Tokyo 141-8562 (JP); NATSUME, Morito, Shinagawa-ku, Tokyo 141-8562 (JP); SATOH, Takeshi, Shinagawa-ku, Tokyo 141-8562 (JP); YUKAWA, Chiaki, Shinagawa-ku, Tokyo 141-8562 (JP)
(74) Representative: Takeuchi, Maya

(57) **Abstract**

An information collection system comprises a mobile terminal used by a potential customer in conjunction with trying on or testing items for sale, a mobile terminal used by salesperson assisting the customer, and a server capable of exchanging data with the mobile terminal. The server includes a storage unit to store a place ID and a user ID in association with each other and an item identification specified by a merchandise specification unit of the customer terminal in association with the place ID and the user ID. In addition, the server includes a second storage unit to store a place ID and a salesperson ID that is received from the salesperson terminal.

## Description

### FIELD

The present invention relates to the field of information collecting technologies in general, and embodiments described herein relate in particular to a system for collecting information, a server of the system, and a control program for causing a computer device to function as the server.

### BACKGROUND

At some stores, customers can try on merchandise in order to find the merchandise that suits the customers. For example, a customer may try on a clothing article. A customer may try hitting with a golf club. Existing systems for collecting information at such stores are capable of simultaneously collecting information regarding a customer together with information regarding merchandise which is tried on or tested by the customer.

At these stores, a salesperson's advice to the customer regarding the merchandise which is tried on or tested may lead to improvement in sales performance when the advice provided is appropriate. For this reason, collection of information regarding the salesperson serving the customer in conjunction with information regarding merchandise which is tried on or tested by the customer may be useful.

To achieve the above end, there is provided an information collecting system, comprising:
a first mobile terminal to be used by a potential customer in conjunction with trying on or testing items for sale;
a second mobile terminal to be used by a salesperson interacting with the potential customer; and
a server capable of exchanging data with the first mobile terminal and the second mobile terminal, wherein
the first mobile terminal includes:
   an ID processing unit configured to detect a place ID that has been allocated to a location used by the potential customer for the trying on or testing items for sale and to transmitting the place ID to the server along with a user ID that is specific to the potential customer, and
   a merchandise specification unit configured to identify an item for sale that the potential customer tries on or tests,
the second mobile terminal includes:
   an ID processing unit configured to detect the place ID and transmit the place ID to the server along with a salesperson ID that is specific to the salesperson, and
   a purchase decision reception unit configured to wait for and receive a first input indicating whether the potential customer purchases the item for sale, and
the server includes:
   a first storage unit configured to store the place ID and the user ID in association with each other when received from the first mobile terminal and to store an item identification from the merchandise specification unit in association with the place ID and the user ID, and
   a second storage unit configured to store the place ID and the salesperson ID in association with each other when received from the second mobile terminal along with the first input.

Preferably, the second mobile terminal further includes a merchandise specification unit configured to identify the item for sale.

Preferably still, the second mobile terminal further includes a reason reception unit configured to receive a second input indicating a reason the potential customer did not purchase the item for sale, and
the second storage unit is configured to store the second input in association with the place ID and the salesperson ID when transmitted by the second mobile terminal if the first input indicates a non-purchase.

Preferably yet, the information collecting system further comprises:
an ID transmitter at the location used by the potential customer and configured to the transmit the place ID that has been allocated to the location.

In the above system, the item is preferably an article of clothing.

Also in the above system, the item is preferably a piece of sports equipment.

Further in the above system, the item is preferably a golf club.

Further in the above system, the first mobile terminal is preferably a cell phone.

Also in the above system, the second mobile terminal is preferably a tablet computer.

Suitably, in the above information collecting system, the server is capable of exchanging data with the first mobile terminal and the second mobile terminal via a wireless communication network.

Suitably still, the first mobile terminal includes a camera and is configured to acquire an image of bar code.

The invention also relates to an information collection system for a store selling merchandise to customers, the information collection system comprising:
a place ID transmitter disposed at a location at which a potential customer can try on or test merchandise before purchasing the merchandise, the place ID transmitter providing a place ID allocated to the location;
a first mobile terminal including a camera, a short-range wireless unit, a wireless interface, a storage memory, and a touch panel;
a second mobile terminal including a camera, a short-range wireless unit, a wireless interface, a storage memory, and a touch panel; and
a server capable of exchanging data with first and second mobile terminal via wireless communication, storing merchandise information in association with a merchandise ID, user information in association with user ID, and trial information received from the first or second mobile terminal in association the place ID, wherein
the first mobile terminal is configured to acquire the place ID from the place ID transmitter and transmit the acquired place ID along with a user ID allocated to the first mobile terminal to the server,
the second mobile terminal is configured to acquire the place ID from the place ID transmitter and transmit the acquired place ID along with a salesperson ID allocated to the second mobile terminal to the server,
the first mobile terminal is configured to transmit a merchandise code for the item to the server if the first mobile terminal acquires the merchandise code, and
the second mobile terminal is configured to transmit the merchandise code for the item to the server if the second mobile terminal acquires the merchandise code.

Preferably, the first mobile terminal is a smartphone.

Preferably still, the server is configured to transmit merchandise information for the item associated with the merchandise code transmitted by the first mobile terminal or the second mobile terminal.

The invention further relates to a server for an information collecting system for a store selling merchandise to customers, the information collection system including a place ID transmitter disposed at a location at which a potential customer can try on or test merchandise before purchasing the merchandise, the place ID transmitter providing a place ID allocated to the location; a first mobile terminal including a camera, a short-range wireless unit, a wireless interface, a storage memory, and a touch panel; a second mobile terminal including a camera, a short-range wireless unit, a wireless interface, a storage memory, and a touch panel, the server comprising:
a first storage unit configured to store a place ID and a user ID transmitted from the first mobile terminal in association with each other and a merchandise code specified by a merchandise specification unit of the first mobile terminal in association with the place ID and the user ID; and
a second storage unit configured to store a place ID and a salesperson ID transmitted from the second mobile terminal in association with each other, to receive an input from the second mobile terminal regarding a purchase of merchandise corresponding to the merchandise code stored in association with the user ID and the place ID in the first storage unit, and store the input regarding the purchase in association with the place ID and the salesperson ID.

Preferably, the server is configured to receive transmissions from the first mobile terminal and the second mobile terminal through a wireless network relay.

Preferably still, the server further comprises:
a point of sales server configured to collect transaction data received from a point of sales terminal.

Preferably yet, the server is configured to transmit merchandise information associated with a particular merchandise code to at least one of the first mobile terminal and the second mobile terminal after the particular merchandise code is received from the at least one of the first mobile terminal and the second mobile terminal.

Suitably, the place ID, the user ID, the salesperson ID, the merchandise code, and the input regarding the purchase of the merchandise corresponding to the merchandise code are stored, along with date and time information, as a trial information record.

Suitably further, the trial information record includes a plurality of merchandise codes corresponding to each item tested by a user particularly associated with the user ID and the place ID and the date and time information included in the trial information record.

### BRIEF DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a schematic block diagram illustrating a system for collecting information at a store.
Fig. 2 is a schematic diagram illustrating a data structure of a trial information record registered in a trial information database.
Fig. 3 is a block diagram illustrating a trial server.
Fig. 4 is a flow chart of an information processing procedure performed by a controller of a user terminal in accordance with a user application program.
Fig. 5 is a flow chart of an information processing procedure performed by a controller of a salesperson terminal in accordance with a salesperson application program.
Fig. 6 is a flow chart of an information processing procedure performed by a central processing unit (CPU) of a trial server in accordance with a control program.
Fig. 7 is a flow chart of the information processing procedure performed by the CPU of the trial server in accordance with the control program.
Fig. 8 is a diagram illustrating an example of a screen displayed on a touch panel of the user terminal or the salesperson terminal.
Fig. 9 is a diagram illustrating an example of the screen displayed on the touch panel of the salesperson terminal.

### DETAILED DESCRIPTION

In general, according to one embodiment, an information collecting system that is capable of collecting information regarding a salesperson serving a customer in conjunction with information regarding merchandise that is tried on or tested at the store by the customer is provided.

In general, according to one embodiment, an information collecting system, comprises a first mobile terminal to be used by a potential customer in conjunction with trying on or testing items for sale, a second mobile terminal to be used by a salesperson interacting with the potential customer, and a server capable of exchanging data with the first mobile terminal and the second mobile terminal. The first mobile terminal includes: an ID processing unit configured to detect a place ID that has been allocated to a location used by the potential customer for the trying on or testing items for sale and to transmit the place ID to the server along with a user ID that is specific to the potential customer, and a merchandise specification unit configured to identify an item for sale that the potential customer tries on or tests. The second mobile terminal includes: an ID processing unit configured to detect the place ID and transmitting the place ID to the server along with a salesperson ID that is specific to the salesperson, and a purchase decision reception unit configured to wait for and receive a first input indicating whether the potential customer purchases the item for sale. The server includes: a first storage unit configured to store the place ID and the user ID in association with each other when received from the first mobile terminal and to store an item identification from the merchandise specification unit in association with the place ID and the user ID, and a second storage unit configured to store the place ID and the salesperson ID in association with each other when received from the second mobile terminal along with the first input.

According to another embodiment, an information collecting system includes a user terminal, which may be used by a user that is trying on or testing merchandise, a salesperson terminal, which may be used by a salesperson, and a server, which communicates with the user terminal and the salesperson terminal.

The user terminal includes an ID processing unit and a merchandise specification unit. The ID processing unit detects a place ID that has been allocated to a particular place where the user tries on or tests the merchandise, and transmits the place ID to the server together with a user ID specific to the user. The merchandise specification unit specifies the merchandise which is tried on by the user.

The salesperson terminal includes an ID processing unit and a purchase decision reception unit. The ID processing unit detects the place ID allocated to the place where the user tries on the merchandise, and transmits the place ID to the server together with a salesperson ID specific to the salesperson using the salesperson terminal. The purchase decision reception unit receives an input regarding whether the user purchases the merchandise which is tried on by the user.

The server includes a first storage unit and a second storage unit. The first storage unit stores the place ID and the user ID in association with each other, and the specification of the merchandise, received from the user terminal in association with the place ID and the user ID. The second storage unit stores the place ID and the salesperson ID in association with each other, received from the salesperson terminal, waits for and receives an input result from the purchase decision reception unit, regarding whether the user purchases the merchandise specified the first storage unit, and stores the input result in association with the place ID and the salesperson ID.

Hereinafter, a description will be given of an example embodiment of an information collecting system capable of collecting information regarding a salesperson serving a customer in conjunction with information regarding merchandise which is tried on by the customer. This particular example embodiment is applied to a store having a fitting room which may be used as a place for the customer to try on clothing merchandise or the like.

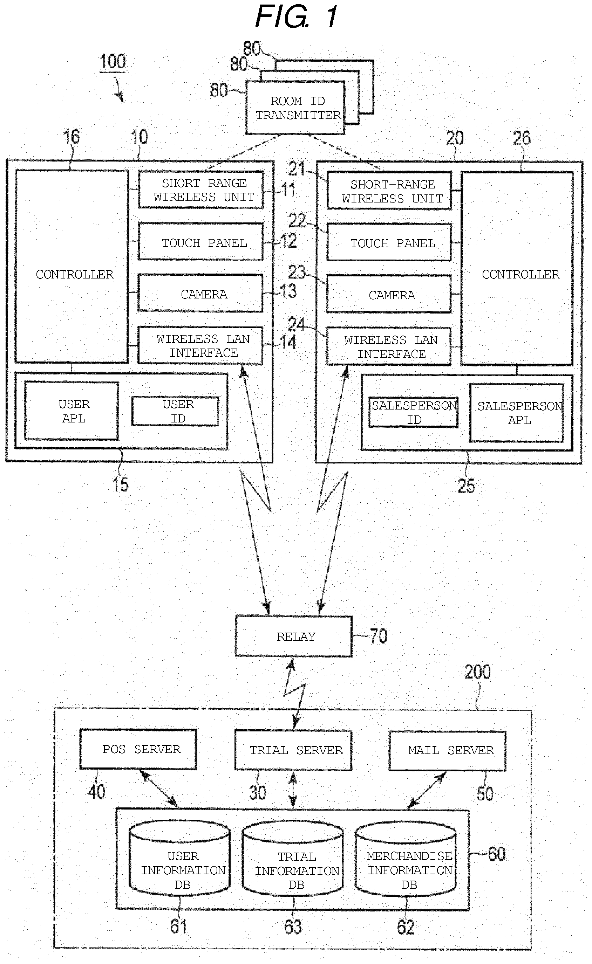

Fig. 1 is a schematic block diagram illustrating an information collecting system 100 at a store. The information collecting system 100 includes a user terminal 10, a salesperson terminal 20, and a trial server 30. The user terminal 10 is used by a customer (user) who tries on merchandise (e.g., a clothing article). The salesperson terminal 20 is used by a salesperson who serves the customer trying on merchandise. The trial server 30 is implemented as a portion of a computing system 200, together with a point of sales (POS) server 40, a mail server 50, a database server 60, and the like. In one embodiment, the computing system 200 is a cloud computing system. The user terminal 10 and the salesperson terminal 20 can connect to the trial server 30 via a relay 70 by a wireless local area network (LAN) to thereby transmit and receive data to and from the trial server 30 or each other.

The information collecting system 100 includes a plurality of room ID transmitters 80, each of which transmits a particular room ID associated with a particular fitting room or other location provided for customers to try on merchandise. The room ID is an example of a place ID that allocated to a place (in this case, a fitting room) which can be used by a user. For example, the room ID transmitters 80 are respectively installed at doors of the fitting rooms, and transmit radio waves representing respective room IDs. A customer using a fitting room may hold the user terminal 10 in proximity to the room ID transmitter 80 installed at the door of the fitting room, and thus the user terminal 10 can detect a room ID transmitted from the room ID transmitter 80. Similarly, a salesperson serving the customer using the fitting room can hold the salesperson terminal 20 in proximity to the room ID transmitter 80 installed at the door of the fitting room, and thus the salesperson terminal 20 can also detect the room ID transmitted from the room ID transmitter 80. Examples of the room ID transmitter 80 may include a Bluetooth® low energy (BLE) beacon.

The user terminal 10 is a portable electronic apparatus including a short-range wireless unit 11, a touch panel 12, a camera 13, a wireless LAN interface 14, a memory 15, and a controller 16. The short-range wireless unit 11 functions as a reception unit that receives radio waves transmitted from the room ID transmitter 80. When a BLE beacon is used as a room ID transmitter 80, the short-range wireless unit 11 may use a Bluetooth® short-range wireless communication standard. The touch panel 12 functions as an input unit and a display unit of the user terminal 10. The camera 13 functions as an imaging unit of the user terminal 10. The wireless LAN interface 14 functions as a communication unit that communicates with the trial server 30. Specifically, the wireless LAN interface 14 transmits and receives data to and from the relay 70 in accordance with a communication standard of a wireless LAN.

The memory 15, which here is a flash memory, stores at least a user application program (may be also referred to as a "user APL") and a user ID. The user APL is a program for causing the portable electronic apparatus to function as a user terminal 10. The user ID is data for identifying the customer who uses the user terminal 10. For example, when the user APL is installed in the user terminal 10, a unique user ID is set in the memory 15. Generally, a user ID which is set in one user terminal 10 will not match a user ID which is set in another user terminal 10.

The controller 16 controls the short-range wireless unit 11, the touch panel 12, the camera 13, and the wireless LAN interface 14 in accordance with the user APL. In one embodiment, the controller 16 is a CPU of the portable electronic apparatus. In one embodiment, the user terminal 10 can be realized by a smart phone, a tablet terminal, or the like.

The salesperson terminal 20 is a portable electronic apparatus including a short-range wireless unit 21, a touch panel 22, a camera 23, a wireless LAN interface 24, a memory 25, and a controller 26. The short-range wireless unit 21 functions as a reception unit that receives radio waves transmitted from the room ID transmitter 80. In embodiment, a BLE beacon is used as the room ID transmitter 80, and the short-range wireless unit 21 may use a short-range Bluetooth® wireless communication standard. Here, the touch panel 22 functions as an input unit and a display unit of the salesperson terminal 20. The camera 23 functions as an imaging unit of the salesperson terminal 20. The wireless LAN interface 24 functions as a communication unit that communicates with the trial server 30. Specifically, the wireless LAN interface 24 transmits and receives data to and from the relay 70 in accordance with a communication standard of a wireless LAN.

The memory 25, which here is a flash memory, stores at least a salesperson application program (may also be referred to as a "salesperson APL") and a salesperson ID. The salesperson application program is a program for causing a portable electronic apparatus to function as the salesperson terminal 20. The salesperson ID is data for identifying a salesperson who uses the salesperson terminal 20. For example, when the salesperson APL is installed in the salesperson terminal 20, a unique salesperson ID is set in the memory 25. Generally, a salesperson ID which is set in one salesperson terminal 20 does not match a salesperson ID which is set in another salesperson terminal 20.

The controller 26 controls the short-range wireless unit 21, the touch panel 22, the camera 23, and the wireless LAN interface 24 in accordance with the salesperson APL. In one embodiment, the controller 26 is a CPU of a portable electronic apparatus. The salesperson terminal 20 may be realized in a smart phone, a tablet terminal or the like.

The trial server 30 collects user information (the user ID, a name, sex, age, an address, a mail address, and the like) of the customer who performs user registration from the user terminal 10. The collected user information is stored in a user information database 61 which is managed by the database server 60.

The trial server 30 selectively provides merchandise information (a merchandise code, a merchandise name, a unit price, size, color, a merchandise image, or the like) which is stored in the merchandise information database 62 to the user terminal 10 or the salesperson terminal 20. Here, the merchandise information database 62 is managed by the database server 60. The user terminal 10 or the salesperson terminal 20 can include a unit that reads a merchandise code of merchandise which is to be (or has been) tried on by the customer. The trial server 30 acquires information from the merchandise information database 62 corresponding to the merchandise by using a merchandise code read by the user terminal 10 or the salesperson terminal 20. The trial server 30 transmits the acquired information to the user terminal 10 or the salesperson terminal 20.

The trial server 30 performs data communication with the user terminal 10 and the salesperson terminal 20 to collect information regarding the salesperson serving the customer in conjunction with information regarding the merchandise the customer has tried on or is trying on. The collected information is stored in the trial information database 63 which is managed by the database server 60.

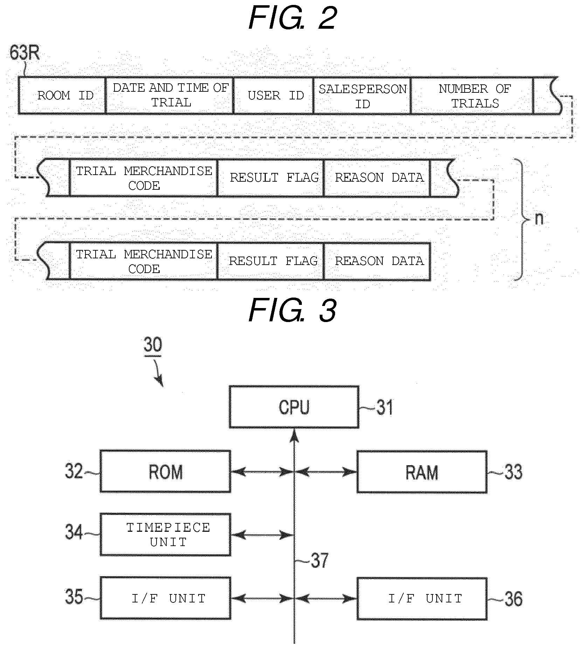

Fig. 2 is a schematic diagram illustrating a data structure of a trial information record 63R stored in the trial information database 63. As illustrated in Fig. 2, the trial information record 63R includes: a room ID, a date and time of a trial, a user ID, a salesperson ID, and a number of trials, and for each (e.g., n total trials) trial: a trial merchandise code , a result flag, and reason data. The number of trials matches the number of different items (merchandise) tried on by the customer, who is identified by the user ID. The trial merchandise code is the merchandise code of the item which is tried on by the customer. Here, the result flag is a 1-bit data for identifying whether or not the customer purchased the merchandise tried on. In this example, data is set to be "0" when the customer does not purchase the merchandise, and data is set to be "1" when the customer purchases the merchandise. The reason data is information or a code indicating a reason why the customer did not purchase the merchandise that was tried on. In this example, data indicating the customer did not purchase the merchandise because it was an ill-fitting size may be set to be "100", data indicating the customer did not purchase the merchandise because it was ill-matched may be set to be "200", data indicating the customer did not purchase the merchandise because of a high price may be set to be "300", and data indicating the customer did not purchase the merchandise for other reasons may be set to be "400".

Fig. 3 is a block diagram illustrating the trial server 30. The trial server 30 may be implemented by a computer device, which includes a CPU 31, a read only memory (ROM) 32, a random access memory (RAM) 33, a timepiece (clock) unit 34, a first interface unit 35, a second interface unit 36, and a system transmission line (bus) 37 for connecting these units.

The CPU 31 is a central processing unit (also referred to as a "processor") of the computer device. The CPU 31 controls each of the units in accordance with an operating system or an application program to perform various functions of the trial server 30. The ROM 32 is a main storage (also referred to as a "memory") of the computer device. Here, the ROM 32 stores the operating system or the application program. The ROM 32 may store data necessary for the CPU 31 to perform processing for controlling each of the units of the computer device. The RAM 33 is another storage of the computer device. The RAM 33 stores data necessary for the CPU 31 to perform various functions as the trial server 30. In addition, the RAM 33 is also used as a work area in which information can be temporarily stored and overwritten by the CPU 31 as necessary.

The timepiece unit 34 functions as a time information source of the trial server 30. The CPU 31 determines the date and time based on time information provided by the timepiece unit 34. The first interface unit 35 performs data communication between the trial server 30 and the relay 70 in accordance with a communication protocol which is set in advance. The second interface unit 36 performs data communication between the trial server 30 and other servers (e.g., the POS server 40, the mail server 50, and the database server 60) in accordance with a communication protocol which is set in advance.

The POS server 40 collects commercial transaction data (transaction data) for each customer transaction (e.g., a merchandise sale) performed on a POS terminal (not shown in the drawing). The POS server 40 updates the user information database 61 based on the collected commercial transaction data. Specifically, in the user information database 61, purchase history information of registered customers (users which have performed user registration) is accumulated in association with user information of each registered customer. The POS server 40 extracts, from the commercial transaction data, a merchandise code, a merchandise name, a price, and a purchase date for each item of merchandise purchased by the customer. The total number of merchandise items purchased, and the like may also be extracted from the collected commercial transaction data. The POS server 40 adds the extracted data to the user information database 61 as purchase history information.

The mail server 50 delivers sales promotion mail to a mail address registered in the user information database 61. The sales promotion mail may be electronic mail delivered through a network such as the Internet. The sales promotion mail is, for example, mail providing a coupon, mail suggesting an article for special sale to the customer, or the like.

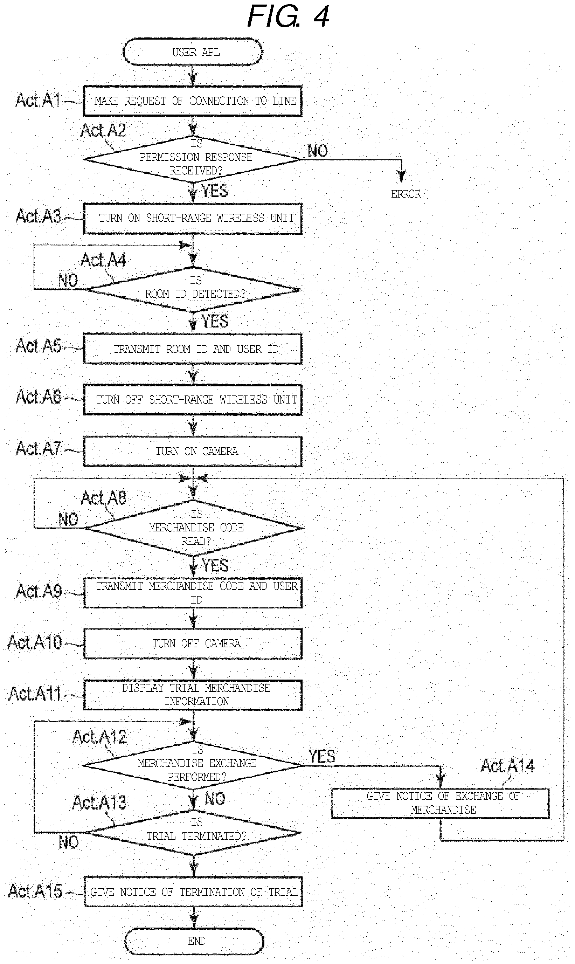

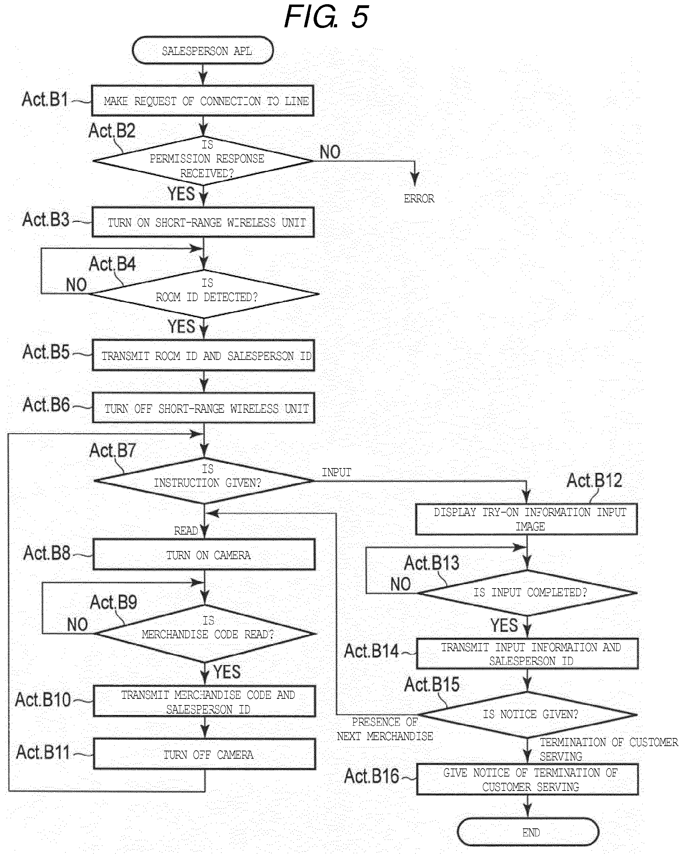

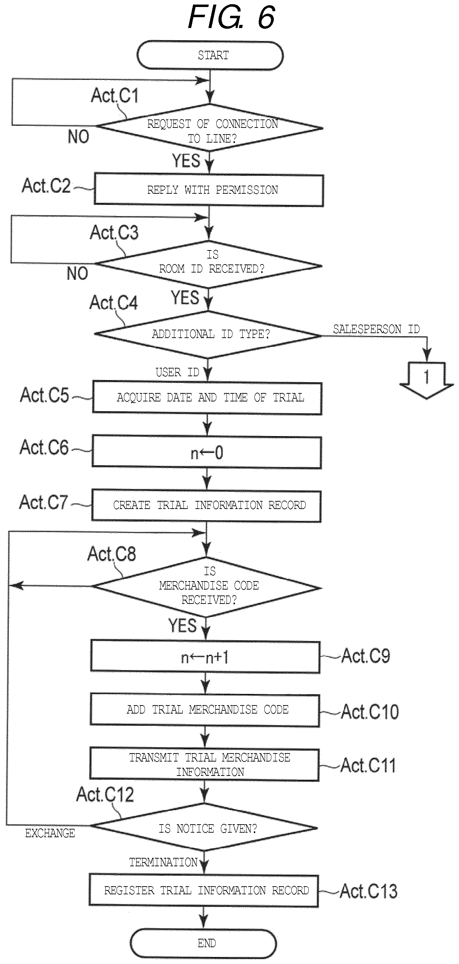

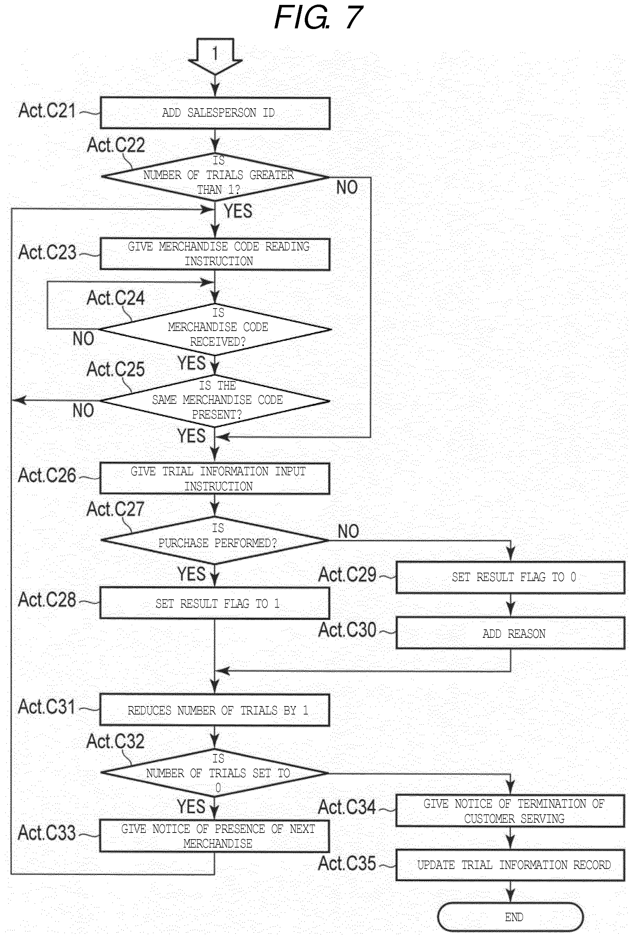

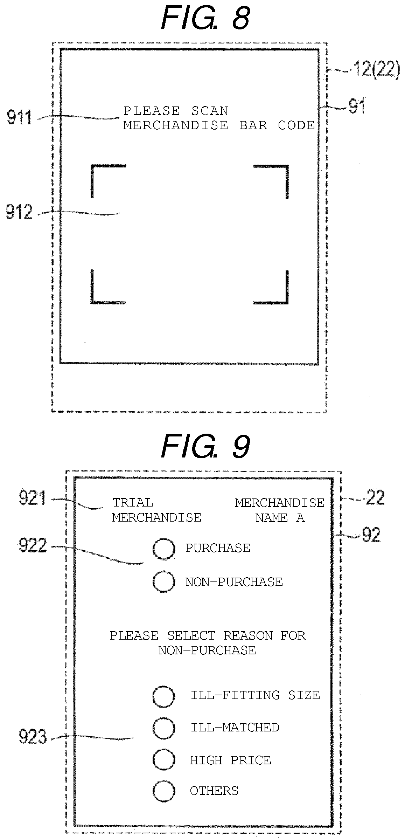

Fig. 4 is a flow chart of an information processing procedure performed by the controller 16 of the user terminal 10 in accordance with a user APL. Fig. 5 is a flow chart of an information processing procedure performed by the controller 26 of the salesperson terminal 20 in accordance with a salesperson APL. Figs. 6 and 7 are flow charts of an information processing procedure performed by the CPU 31 of the trial server 30 in accordance with a control program. Fig. 8 illustrates an example of a screen displayed on the touch panel 12 of the user terminal 10 or the touch panel 22 of the salesperson terminal 20. Fig. 9 illustrates an example of a screen displayed on the touch panel 22. An example of an operation of the information collecting system 100 will be described with reference to these drawings. However, it should be noted, the information processing procedures specifically illustrated in Figs. 4 to 7 are just examples, and it is possible to use various processing procedures other than those specifically illustrated by which substantially similar results can be obtained.

First, a customer initiates the user APL installed in the user terminal 10. When the user APL is initiated, the controller 16 initiates information processing of the procedure illustrated in the flow chart of Fig. 4. That is, the controller 16 requests the wireless LAN interface 14 to connect to the trial server 30, as Act.A1. The wireless LAN interface 14 transmits a connection request signal in a wireless manner in response to the request by setting a destination to be the trial server 30 and setting a transmission source to be the user terminal 10. The connection request signal is received by the relay 70 and is transmitted to the trial server 30 from the relay 70.

As illustrated in Fig. 6, the CPU 31 of the trial server 30 waits for the connection request signal, as Act.C1. When the connection request signal is received through the first interface unit 35 (YES in Act.C1), the CPU 31 requests the first interface unit 35 to reply with a permission response signal, as Act.C2. The first interface unit 35 transmits a permission response signal in response to the connection request signal, by setting a transmission source of the connection request signal to be a destination. The permission response signal is transmitted via the relay 70 in a wireless manner, and is received by the user terminal 10 which is the transmission source of the connection request signal.

The controller 16 of the user terminal 10 transmitting the connection request signal in a wireless manner waits for the permission response signal, as Act.A2. Here, when the permission response signal cannot be received after an elapse for a predetermined time (NO in Act.A2), the controller 16 sets the user terminal 10 to be in a communication error state.

When the permission response signal can be received by the wireless LAN interface 14 (YES in Act.A2), the controller 16 sets the short-range wireless unit 11 to be in an on-state, as Act.A3. That is, the controller 16 initiates the scanning of an input from the short-range wireless unit 11. The controller 16 waits for a room ID to be detected by the input from the short-range wireless unit 11, as Act.A4.

Further, the customer initiating the user APL holds the user terminal 10 over the room ID transmitter 80, which is installed at the door of a fitting room, when entering the fitting room. Then, radio waves of a room ID transmitted from the room ID transmitter 80 are received by the short-range wireless unit 11. When the room ID is detected from the radio waves received by the short-range wireless unit 11 (YES in Act.A4), controller 16 requests the wireless LAN interface 14 to transmit the room ID and the user ID which are stored in the memory 15 to the trial server 30, as Act.A5. The wireless LAN interface 14 transmits a first data signal in a wireless manner in response to the request by setting a destination to be the trial server 30 and setting a transmission source to be the user terminal 10. The first data signal includes the room ID and the user ID. The first data signal is received by the relay 70 and is transmitted to the trial server 30 from the relay 70.

Here, the user terminal 10 carrying out the processes of Act.A3 to Act.A5 performed by the controller 16 constitutes an ID processing unit.

The CPU 31 of the trial server 30 transmitting the permission response signal waits for the reception of the room ID, as Act.C3. When the first data signal including the room ID is received through the first interface unit 35 (YES in Act.C3), the CPU 31 determines whether an ID other than the room ID included in the first data signal is a user ID or a salesperson ID, as Act.C4. In this example case, the ID other than the room ID is a user ID ("user ID" in Act.C4), and thus the CPU 31 acquires the date and time as clocked or otherwise determined by the timepiece unit 34 as the date and time of trial, as Act.C5. In addition, the CPU 31 resets a number-of-trials counter n to "0", as Act.C6. The number-of-trials counter n is formed with, for example, the RAM 33.

The CPU 31 performing the acquisition of the date and time of trial and the reset of the number-of-trials counter n also creates the trial information record 63R, as Act.C7. In the trial information record 63R, the room ID and the user ID included in the first data signal, the date and time of trial acquired from the timepiece unit 34, and the present value of the number-of-trials counter n are set. The trial information record 36R is stored in the RAM 33.

The controller 16 turns off the short-range wireless unit 11, as Act.A6. That is, the controller 16 stops the scanning of the input from the short-range wireless unit 11. The controller 16 turns on the camera 13, as Act.A7. That is, the controller 16 starts to load a captured image from the camera 13. The controller 16 waits for a merchandise code to be read in the captured image loaded from the camera 13, as Act.A8.

When loading a captured image from the camera 13 is initiated, a bar code reading image 91 is displayed on a portion of the screen of the touch panel 12, as illustrated in Fig. 8. A guidance 911 for prompting a user to scan a bar code attached to the merchandise and a mark 912 representing a scanning region of the bar code are displayed in the bar code reading image 91. In the user terminal 10, the captured image received from the camera 13 is displayed on the inner side of the mark 912. The controller 16 waits for the bar code to be displayed inside the mark 912. Once the bar code is displayed, the bar code is then analyzed, and it can be determined whether or not the merchandise code has been read.

A user holding the user terminal 10 over the room ID transmitter 80 then enters the fitting room and tries on the merchandise. At this time, the user confirming the bar code reading image 91 captures the bar code attached to the merchandise which is to be or is being tried on by the user using the camera 13. Since the bar code includes a merchandise code specific to the merchandise, the controller 16 can recognizes that the merchandise code has been read.

When the merchandise code is read (YES in Act.A8), the controller 16 requests the wireless LAN interface 14 to transmit the merchandise code and the user ID to the trial server 30, as Act.A9. The wireless LAN interface 14 transmits a second data signal in a wireless manner in response to the request by setting a destination to be the trial server 30 and setting a transmission source to be the user terminal 10. The second data signal includes the merchandise code and the user ID. The second data signal is received by the relay 70 and is transmitted to the trial server 30 from the relay 70.

In one embodiment, the controller 16 of the user terminal 10 that is programmed to carry out the processes of Act.A7 to Act.A9 is the merchandise specification unit.

The CPU 31 of the trial server 30 creating the trial information record 63R waits for the reception of the merchandise code, as Act.C8. When the second data signal including the merchandise code is received through the first interface unit 35 (YES in Act.C8), the CPU 31 increments the number-of-trials counter n by "1", as Act.C9. The CPU 31 retrieves the trial information record 63R in which the user ID included in the second data signal together with the merchandise code has been set from the RAM 33, and changes the number of trials of the trial information record 63R to the value of the number-of-trials counter n. In addition, the CPU 31 adds a second (new) trial merchandise code to the trial information record 63R, as Act.C10. This trial merchandise code is the merchandise code included in the second data signal.

Here, the trial server 30 can be considered a first storage unit performing the processes of Act.C3 to Act.C10 with the CPU 31.

Thereafter, the CPU 31 acquires information of trial merchandise identified by the trial merchandise code from the merchandise information database 62, as Act.C12. The CPU 31 requests the first interface unit 35 to transmit the trial merchandise information to the user terminal 10 that sent the second data signal. The first interface unit 35 transmits a third data signal in response to the request by setting a transmission source of the second data signal to be a destination. The third data signal includes the trial merchandise information acquired from the merchandise information database 62. The third data signal is transmitted via the relay 70 in a wireless manner and is received by the user terminal 10 which transmitted the second data signal.

The controller 16 turns off the camera 13, as Act.A10. That is, the controller 16 stops loading an image from the camera 13. When the third data signal is received by the wireless LAN interface 14, the controller 16 displays the trial merchandise information included in the third data signal on a portion of the screen of the touch panel 12, as Act.A11. The customer can confirm size information, color information, merchandise image information, and the like of the merchandise which is being tried on. The customer can also find out whether there is another size of the merchandise by confirming the size information. The customer can also find out whether there is another color of the merchandise by confirming the color information. The customer can also find out whether there is another merchandise item to coordinate with the present merchandise which being tried on by the customer by confirming the merchandise image information.

Here, a merchandise exchange button or icon for the customer to designate the switching of merchandise (e.g., a change in size, color, type, or the like) and a trial termination button or icon for the customer to designate the termination of trial can be displayed on another portion of the screen of the touch panel 12. The customer trying on a different merchandise item may touch the merchandise exchange button. The customer terminating the trial session touches the trial termination button.

The controller 16 (of the user terminal 10 having the trial merchandise information displayed thereon) waits for the merchandise exchange button to be touched as Act.A12, or waits for the trial termination button to be touched as Act.A13. When it is detected that the merchandise exchange button has been touched, based on a signal from the touch panel 12 (YES in Act.A12), the controller 16 requests the wireless LAN interface 14 to notify the trial server 30 of the exchange of merchandise, as Act.A14. The wireless LAN interface 14 transmits a merchandise exchange notification signal in a wireless manner in response to the request by setting a destination to be the trial server 30 and setting a transmission source to be the user terminal 10. The merchandise exchange notification signal is received by the relay 70 and is transmitted to the trial server 30 from the relay 70. The controller 16 of the user terminal 10 transmitting the merchandise exchange notification signal returns to the process of Act.A8.

Alternatively, when it is detected that the trial termination button has been touched, on the basis of a signal from the touch panel 12 (YES in Act.A13), the controller 16 requests the wireless LAN interface 14 to notify the trial server 30 of the termination of the trial, as Act.A15. The wireless LAN interface 14 transmits a trial termination notification signal in a wireless manner in response to the request by setting a destination to be the trial server 30 and setting a transmission source to be the user terminal 10. The trial termination notification signal is received by the relay 70 and is transmitted to the trial server 30 from the relay 70. The controller 16 of the user terminal 10 transmitting the trial termination notification signal terminates the processing.

The CPU 31 of the trial server 30 waits for an exchange or termination notice to be given by the user terminal 10, as Act.C12. Here, when the merchandise exchange notification signal is received ("exchange" in Act.C12), the CPU 31 returns to Act.C8.

When the trial termination notification signal is received ("termination" in Act.C12), the CPU 31 registers the trial information record 63R stored in the RAM 33 in the trial information database 63, as Act.C13. Hereby, the CPU 31 terminates the processing.

The number of trials is "1" with respect to the customer trying on only one merchandise item, and the trial information record 63R having only one trial merchandise code set therein is registered (stored) in the trial information database 63. The number of trials is "2" or greater with respect to a customer trying on two or more merchandise items, and the trial information record 63R having the same number of trial merchandise codes as the number of trials set therein is registered (stored) in the trial information database 63.

In another example, the salesperson who serves a customer trying on the merchandise and gives advice to the customer can start up the salesperson APL installed in the salesperson terminal 20. When the salesperson APL is initiated, the controller 26 initiates information processing of the procedure illustrated in the flow chart of Fig. 5. That is, the controller 26 requests the wireless LAN interface 24 to connect to the trial server 30, as Act.B1. The wireless LAN interface 24 transmits a connection request signal in a wireless manner in response to the request by setting a destination to be the trial server 30 and setting a transmission source to be the salesperson terminal 20. The connection request signal is received by the relay 70 and is transmitted to the trial server 30 from the relay 70.

As illustrated in Fig. 6, the CPU 31 of the trial server 30 waits for the connection request signal, as Act.C1. When the connection request signal is received through the first interface unit 35 (YES in Act.C1), the CPU 31 requests the first interface unit 35 to reply with a permission response, as Act.C2. The first interface unit 35 transmits a permission response signal in response to the request by setting a transmission source of the connection request signal to be a destination. The permission response signal is transmitted via the relay 70 in a wireless manner, and is received by the salesperson terminal 20 which transmits the connection request signal.

The controller 26 of the salesperson terminal 20 transmitting the connection request signal in a wireless manner waits for the permission response signal, as Act.B2. Here, when the permission response signal is not received in after an elapse of a predetermined time (NO in Act.B2), the controller 26 sets a communication error state.

When the permission response signal is received by the wireless LAN interface 24 (YES in Act.B2), the controller 26 sets the short-range wireless unit 21 to be in an on-state, as Act.B3. That is, the controller 26 initiates the scanning of an input from the short-range wireless unit 21. The controller 26 waits for a room ID to be detected by the input from the short-range wireless unit 21, as Act.B4.

Further, the salesperson holds the salesperson terminal 20 over the room ID transmitter 80, which is installed at the door of a fitting room. Then, radio waves of a room ID transmitted from the room ID transmitter 80 are received by the short-range wireless unit 21. When the room ID is detected from the radio waves received by the short-range wireless unit 21 (YES in Act.B4), controller 26 requests the wireless LAN interface 24 to transmit the room ID and a salesperson ID which are stored in the memory 25 to the trial server 30, as Act.B5. The wireless LAN interface 24 transmits a fourth data signal in a wireless manner in response to the request by setting a destination to be the trial server 30 and setting a transmission source to be the salesperson terminal 20. The fourth data signal includes the room ID and the salesperson ID. The fourth data signal is received by the relay 70 and is transmitted to the trial server 30 from the relay 70.

Here, the salesperson terminal 20 carrying out the processes of Act.B3 to Act.B5 performed by the controller 26 constitutes an ID processing unit.

The CPU 31 of the trial server 30 transmitting the permission response signal waits for the reception of the room ID, as Act.C3. When the fourth data signal including the room ID is received through the first interface unit 35 (YES in Act.C3), the CPU 31 determines whether an ID other than the room ID included in the fourth data signal is a user ID or a salesperson ID, as Act.C4. In this case, the ID other than the room ID is the salesperson ID ("salesperson ID" in Act.C4), and thus the CPU 31 proceeds to the process of Act.C21 of Fig. 7. That is, the CPU 31 retrieves trial information record 63R, in which the room ID included in the fourth data signal has been previously set but for which the salesperson ID has not been set, from the trial information database 63, and reads the retrieved trial information record on the RAM 33. The CPU 31 adds the salesperson ID included in the fourth data signal with the room ID to the trial information record 63R (hereinafter, referred to as a "target record" 63R). In addition, the CPU 31 copies the number of trials of the target record 63R to a predetermined area of the RAM 33, as Act.C22. The CPU 31 confirms whether the copied number of trials is "1" or "2" or greater. When the number of trials is "1", the number of merchandise items tried on by the customer is one. In this case (NO in Act.C22), the CPU 31 proceeds to the process of Act.C26 without performing the processes of Act.C23 to Act.C25.

When the number of trials is "2" or greater, the number of merchandise items tried on by the customer is two or greater. In this case (YES in Act.C22), the CPU 31 performs the processes of Act.C23 to Act.C25 and then proceeds to the process of Act.C26. That is, the CPU 31 requests the first interface unit 35 to transmit a merchandise code reading instruction to the salesperson terminal 20 which is a transmission source of the fourth data signal, as Act.C23. The first interface unit 35 transmits a signal of the merchandise code reading instruction in response to the request by setting a transmission source of the fourth data signal to be a destination. The signal of the merchandise code reading instruction is transmitted via the relay 70 in a wireless manner, and is received by the salesperson terminal 20.

The controller 26 turns off the short-range wireless unit 21, as Act.B6. That is, the controller 26 stops the scanning of the input from the short-range wireless unit 21. The controller 26 waits for an instruction to be given by the trial server 30, as Act.B7. Here, when the signal of the merchandise code reading instruction is received through the wireless LAN interface 24 (reading in Act.B7), the controller 26 turns on the camera 23, as Act.B8. That is, the controller 26 initiates to load a captured image from the camera 23. The controller 26 waits for a merchandise code to be read by the captured image loaded from the camera 23, as Act.B9.

When loading a captured image from the camera 13 is initiated, the bar code reading image 91 is displayed on a portion of the screen of the touch panel 22, as illustrated in Fig. 8. The guidance 911 for prompting a user to scan a bar code attached to merchandise and the mark 912 representing a scanning region of the bar code are displayed in the bar code reading image 91. In the salesperson terminal 20, the captured image received from the camera 23 is displayed on the inner side of the mark 912. The controller 26 waits for the bar code to be displayed inside the mark 912. When the bar code is displayed, the bar code is analyzed, and it is determined whether or not the merchandise code is read.

Consequently, the salesperson holding the salesperson terminal 20 over the room ID transmitter 80 receives merchandise that the customer finishes trying on. At this time, the salesperson confirming the bar code reading image 91 captures the bar code, attached to the merchandise that customer finishes trying on, by the camera 23. Since the bar code includes a merchandise code specific to the merchandise, the controller 26 recognizes that the merchandise code is read.

When the merchandise code is read (YES in Act.B9), the controller 26 requests the wireless LAN interface 24 to transmit the merchandise code and the salesperson ID to the trial server 30, as Act.B10. The wireless LAN interface 24 transmits a fifth data signal in a wireless manner in response to the request by setting a destination to be the trial server 30 and setting a transmission source to be the salesperson terminal 20. The fifth data signal includes the merchandise code and the salesperson ID. The fifth data signal is transmitted to the trial server 30 via the relay 70.

Here, the salesperson terminal 20 carrying out the processes of Act.B8 to Act.B10 performed by the controller 26 constitutes the merchandise specification unit.

The CPU 31 of the trial server 30 transmitting the merchandise code reading instruction waits for the reception of the merchandise code, as Act.C24. When the fifth data signal including the merchandise code is received through the first interface unit 35 (YES in Act.C24), the CPU 31 confirms whether or not the merchandise code included in the fifth data signal is set as a trial merchandise code in the target record 63R, as Act.C25. When the merchandise code is set as the trial merchandise code, the merchandise of which the bar code read by the salesperson is merchandise which is tried on by the customer. In this case (YES in Act.C25), the CPU 31 proceeds to the process of Act.C26. When the merchandise code is not set as the trial merchandise code, the merchandise of which the bar code read by the salesperson is not merchandise which is tried on by the customer. In this case (NO in Act.C25), the CPU 31 returns to the process of Act.C23. The CPU 31 requests the first interface unit 35 to transmit the merchandise code reading instruction to the salesperson terminal 20 which is the transmission source of the fourth data signal again.

In Act.C26, the CPU 31 requests the first interface unit 35 to transmit a trial information input instruction to the salesperson terminal 20 which is a transmission source of the fourth or fifth data signal. The first interface unit 35 transmits a signal of the trial information input instruction in response to the request by setting a transmission source of the fourth or fifth data signal to be a destination. When the number of trials is "1" in Act.C22, the trial information input instruction includes the only trial merchandise code which is set in the target record 63R. When the number of trials is "2" or greater in Act.C22, the trial information input instruction includes a trial merchandise code coinciding with the merchandise code received in Act.C24, among a plurality of trial merchandise codes set in the target record 63R. The signal of the trial information input instruction is transmitted via the relay 70 in a wireless manner, and is received by the salesperson terminal 20 which is the transmission source of the fourth or fifth data signal.

The controller 26 of the salesperson terminal 20 transmitting the fifth data signal turns off the camera 23, as Act.B11. That is, the controller 26 stops loading an image from the camera 23. The controller 26 returns to the process of Act.B7 to wait for the next instruction to be given by the trial server 30. Here, when the signal of the merchandise code reading instruction is received again through the wireless LAN interface 24 (reading in Act.B7), the controller 26 repeatedly performs the processes of Act.B8 to Act.B11.

When the signal of the trial information input instruction is received (input in Act.B7), the controller 26 displays a trial information input image 92 (see Fig. 9) on a portion of the screen of the touch panel 12, as Act.B12.

Fig. 9 illustrates an example of the trial information input image 92. The trial information input image 92 is provided with the merchandise name 921 of the merchandise (trial merchandise) which is tried on by the customer, a radio button 922 for inputting whether the use purchases the merchandise, and a radio button 923 for selecting a reason why the customer does not purchase merchandise, among a plurality of items. In this embodiment, the plurality of items are set to be four items of "ill-fitting size", "ill-matched", "high price" and "others".

The salesperson confirming the trial information input image 92 inputs whether or not the customer purchases the merchandise from the radio button 922. When the customer does not purchase the merchandise, the salesperson checks with the customer about the reason why the customer does not purchase the merchandise, and inputs the reason by using the radio button 923.

The controller 26 of the salesperson terminal 20 having the trial information input image 92 displayed thereon waits for an input to the trial information input image 92 to be completed, as Act.B13. When "purchase" is selected in the radio button 922, the controller 26 recognizes that the input is completed. When "non-purchase" is selected in the radio button 922, the controller 26 recognizes that the input is completed in accordance with any one reason being selected in the radio button 923. When it is recognized that the input is completed (YES in Act.B13), the controller 26 requests the wireless LAN interface 24 to transmit information to be input to the trial information input image 92 to the trial server 30 together with the salesperson ID, as Act.B14. The wireless LAN interface 24 transmits a sixth data signal in a wireless manner in response to the request by setting a destination to be the trial server 30 and setting a transmission source to be the salesperson terminal 20. The sixth data signal includes the information to be input to the trial information input image 92 and the salesperson ID. The sixth data signal is transmitted to the trial server 30 v the relay 70.

In one embodiment, the controller 16 of the salesperson terminal 20 that is programmed to carry out the processes of Act.B12 to Act.B 14 is a purchase decision reception unit and a reason reception unit.

The CPU 31 of the trial server 30 which gives notice of the trial information input instruction determines purchase decision, as Act.C27. That is, the CPU 31 waits for the sixth data signal, and determines whether or not the customer purchases the merchandise which is tried on by the customer from the input information included in the data signal when the CPU receives the sixth data signal. When the customer purchases the merchandise (YES in Act.C27), the CPU 31 sets a result flag corresponding to the merchandise code of the target record 63R to be "1", as Act.C28. When the customer does not purchase the merchandise (NO in Act.C27), the CPU 31 sets the result flag corresponding to the merchandise code of the target record 63R to be "0", as Act.C29. In addition, the CPU 31 sets reason data in correlation with the merchandise code of the target record 63R, as Act.C30.

Here, the trial server 30 carrying out the processes of Act.C21 to Act.C30 performed by the CPU 31 constitutes a second storage unit.

When the process of Act.C28 or Act.C30 is terminated, the CPU 31 reduces the number of trials copied to the predetermined area of the RAM 33 by "1", as Act.C31. The CPU 31 determines whether or not the number of trials is set to "0", as Act.C32. When the number of trials is greater than "0", the CPU 31 requests the first interface unit 35 to transmit a signal for giving notice of the presence of the next merchandise to the salesperson terminal 20 which is a transmission source of the sixth data signal, as Act.C33. The CPU 31 returns to the process of Act.C23.

When the number of trials is "0", the CPU 31 requests the first interface unit 35 to transmit a signal for giving notice of the termination of customer serving to the salesperson terminal 20 which is the transmission source of the sixth data signal, as Act.C34.

The first interface unit 35 transmits a seventh data signal in response to the request in the process of Act.C33 or Act.C34 by setting the transmission source of the sixth data signal to be a destination. The seventh data signal includes data for giving notice of the presence of the next merchandise or the termination of customer serving. The seventh data signal is transmitted via the relay 70 in a wireless manner, and is received by the salesperson terminal 20 which is the transmission source of the sixth data signal.

The controller 26 of the salesperson terminal 20 transmitting the sixth data signal waits for notice given by the trial server 30, as Act.B15. When the seventh data signal including the notice is received, the controller 26 determines whether the notice included in the seventh data signal indicates notice of the presence of the next merchandise or notice of the termination of customer serving. When the notice is notice of the presence of the next merchandise ("presence of next merchandise" in Act.B15), the controller 26 returns to the process of Act.B8. The controller 26 performs the processes of Act.B8 to Act.B11 again.

When notice of the termination of customer serving is given ("termination of customer serving" in Act.B15), the controller 26 gives notice of the termination of customer serving, as Act.B16. For example, the controller 26 displays an image indicating the termination of customer serving on the touch panel 22. Hereby, the controller 26 terminates the processing.

The CPU 31 of the trial server 30 which gives notice of the termination of customer serving registers the target record 63R on the RAM 33 in the trial information database 63 again so that the target record 63R of the trial information database 63 is updated to the latest information, as Act.C35. Hereby, the CPU 31 terminates the processing.

As described above, the user terminal 10 used by the customer includes a unit that detects a room ID allocated to a fitting room used for the customer's trial and transmits the room ID to the trial server 30 together with the user ID specific to the customer, and a unit that specifies the merchandise which is tried on by the customer. In addition, the salesperson terminal 20 used by the salesperson includes a unit that detects the room ID of the fitting room used by the customer and transmits the room ID to the trial server 30 together with that salesperson ID specific to the salesperson, and a unit that receives an input regarding whether or not the customer purchases the merchandise which is tried on by the customer. The trial server 30 stores the room ID and the user ID received from the user terminal 10 in association with each other and the specification of the merchandise specified by the merchandise specification unit of the user terminal 10 in association with the room ID and the user ID. In addition, the trial server 30 stores the room ID and the salesperson ID received from the salesperson terminal 20 in association with each other, waits for and receives an input regarding whether the customer purchase the merchandise specified in association with the room ID, and stores an input result in association with the room ID and the salesperson ID. These pieces of stored data are stored in the trial information database 63 as one record 63R.

Therefore, a system according to this embodiment easily collects information indicating who is the salesperson serving the customer together with information indicating whether the customer purchases merchandise which is tried on by the customer. As a result, an incentive may be given to the salesperson to improve sales performance with the customer the salesperson is serving, and to improve the salesperson's eagerness in sales.

In addition, the salesperson terminal 20 also includes a unit that specifies the merchandise which is tried on by the customer. The trial server 30 waits for and receives an input regarding whether the customer purchases the merchandise specified in association with the room ID by the salesperson terminal 20. Therefore, only the merchandise which is tried on by the customer and specified in the user terminal 10 can be input in the salesperson terminal 20. As a result, a useless salesperson's input (mistake) regarding merchandise which is not even tried on by the customer may not occur.

In addition, the salesperson terminal 20 further includes a unit that receives an input of a reason why the customer does not purchase the merchandise which is tried on by the customer, and the trial server 30 stores the reason for non-purchase in association with the room ID and the salesperson ID when the customer does not purchase the merchandise which is tried on by the customer. Therefore, a reason why the customer does not purchase the merchandise after the customer's may be collected.

In general, the customer's trial of merchandise may indicate that the customer is interested in the merchandise. Furthermore, a reason for non-purchase may infer what merchandise the customer wants. Consequently, sales performance may be improved by delivering a coupon of the merchandise the customer wants through mail or delivering guidance mail for an article for special sale, or the like by utilizing the mail server 50.

Further, in this embodiment, the room ID transmitter 80 transmitting a room ID allocated to the corresponding room is provided for each fitting room, and the user terminal 10 and the salesperson terminal 20 detect the room ID transmitted from the room ID transmitter 80. Therefore, the customer and the salesperson may acquire the room ID.

The above examples are used for the purposes of illustrations only. Accordingly, the scope of the invention should not be limited to these specific applications.

In some embodiments, the trial information database 63 is managed by the database server 60. In other embodiments, the trial information database 63 may instead be managed by the trial server 30. The trial server 30 may manage the merchandise information database 62 and the user information database 61, and thus it is also possible to omit the database server 60 in such embodiments.

In an example, the room ID transmitter 80 for transmitting a room ID allocated to a corresponding room is provided for each fitting room. In some embodiments, the room ID transmitters 80 are unnecessary. For example, a bar code symbol including a room ID allocated to a corresponding fitting room can be displayed in or on each fitting room. In such instances, the customer or the salesperson may capture an image of the bar code using the camera 13 or the camera 23 to detect the room ID. With such a configuration, it is possible to omit the room ID transmitter 80 in some embodiments. Accordingly, a terminal device does not need to include a short-range wireless unit 11 or 21 to be adopted as the user terminal 10 or the salesperson terminal 20.

The example embodiment(s) described above an information collection system was applied to a store in which it is possible to try on a clothing article. However, an information collection system of an embodiment can also be similarly applied to a store that includes, for example, a trial hitting room for allowing pre-purchase testing of a golf club by a customer. In short, embodiments of the present disclosure can be applied to any type of store in which a customer can try on or test merchandise to find merchandise that suits the customer. For example, in a case of a golf club trial, an ID transmitter may be provided in a place such as a trial hitting space (e.g., a driving range bay or a testing room) so as to transmit an ID for specifying the particular trial hitting space place. In this case, the ID for specifying the place is the place ID.

The transfer of the trial server 30 is generally performed in a state where a program such as a control program is stored in a ROM. However, embodiments of the present disclosure are not limited thereto, and, a control program or the like can be transferred separately from a computer device and may be written in a writable storage device included in the computer device, in accordance with the operation of a user or the like. The transfer of the control program and the like can be performed by being recorded in a removable recording medium or by communication through a network. Any type of recording medium, such as a CD-ROM or a memory card, or any other recording medium that can store a program and is readable by a device, may be used. The functions obtained by the installation or downloading of a program may be functions realized in cooperation with an operating system (OS) and the like in the device.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

## Claims

1. An information collecting system, comprising:
a first mobile terminal to be used by a potential customer in conjunction with trying on or testing items for sale;
a second mobile terminal to be used by a salesperson interacting with the potential customer; and
a server capable of exchanging data with the first mobile terminal and the second mobile terminal, wherein
the first mobile terminal includes:
an ID processing unit configured to detect a place ID that has been allocated to a location used by the potential customer for the trying on or testing items for sale and to transmitting the place ID to the server along with a user ID that is specific to the potential customer, and
a merchandise specification unit configured to identify an item for sale that the potential customer tries on or tests,
the second mobile terminal includes:
an ID processing unit configured to detect the place ID and transmit the place ID to the server along with a salesperson ID that is specific to the salesperson, and
a purchase decision reception unit configured to wait for and receive a first input indicating whether the potential customer purchases the item for sale, and
the server includes:
a first storage unit configured to store the place ID and the user ID in association with each other when received from the first mobile terminal and to store an item identification from the merchandise specification unit in association with the place ID and the user ID, and
a second storage unit configured to store the place ID and the salesperson ID in association with each other when received from the second mobile terminal along with the first input.

2. The information collecting system according to claim 1, wherein the second mobile terminal further includes a merchandise specification unit configured to identify the item for sale.

3. The information collecting system according to claim 1 or 2, wherein
the second mobile terminal further includes a reason reception unit configured to receive a second input indicating a reason the potential customer did not purchase the item for sale, and
the second storage unit is configured to store the second input in association with the place ID and the salesperson ID when transmitted by the second mobile terminal if the first input indicates a non-purchase.

4. The information collecting system according to any one of claims 1 to 3, further comprising:
an ID transmitter at the location used by the potential customer and configured to the transmit the place ID that has been allocated to the location.

5. The information collecting system according to any one of claims 1 to 4, wherein the server is capable of exchanging data with the first mobile terminal and the second mobile terminal via a wireless communication network.

6. The information collecting system according to any one of claims 1 to 5, wherein the first mobile terminal includes a camera and is configured to acquire an image of bar code.

7. An information collection system for a store selling merchandise to customers, the information collection system comprising:
a place ID transmitter disposed at a location at which a potential customer can try on or test merchandise before purchasing the merchandise, the place ID transmitter providing a place ID allocated to the location;
a first mobile terminal including a camera, a short-range wireless unit, a wireless interface, a storage memory, and a touch panel;
a second mobile terminal including a camera, a short-range wireless unit, a wireless interface, a storage memory, and a touch panel; and
a server capable of exchanging data with first and second mobile terminal via wireless communication, storing merchandise information in association with a merchandise ID, user information in association with user ID, and trial information received from the first or second mobile terminal in association the place ID, wherein
the first mobile terminal is configured to acquire the place ID from the place ID transmitter and transmit the acquired place ID along with a user ID allocated to the first mobile terminal to the server,
the second mobile terminal is configured to acquire the place ID from the place ID transmitter and transmit the acquired place ID along with a salesperson ID allocated to the second mobile terminal to the server,
the first mobile terminal is configured to transmit a merchandise code for the item to the server if the first mobile terminal acquires the merchandise code, and
the second mobile terminal is configured to transmit the merchandise code for the item to the server if the second mobile terminal acquires the merchandise code.

8. The information collection system according to claim 7, wherein the first mobile terminal is a smartphone.

9. The information collection system according to claim 7 or 8,
wherein the server is configured to transmit merchandise information for the item associated with the merchandise code transmitted by the first mobile terminal or the second mobile terminal.

10. A server for an information collecting system for a store selling merchandise to customers, the information collection system including a place ID transmitter disposed at a location at which a potential customer can try on or test merchandise before purchasing the merchandise, the place ID transmitter providing a place ID allocated to the location; a first mobile terminal including a camera, a short-range wireless unit, a wireless interface, a storage memory, and a touch panel; a second mobile terminal including a camera, a short-range wireless unit, a wireless interface, a storage memory, and a touch panel, the server comprising:
a first storage unit configured to store a place ID and a user ID transmitted from the first mobile terminal in association with each other and a merchandise code specified by a merchandise specification unit of the first mobile terminal in association with the place ID and the user ID; and
a second storage unit configured to store a place ID and a salesperson ID transmitted from the second mobile terminal in association with each other, to receive an input from the second mobile terminal regarding a purchase of merchandise corresponding to the merchandise code stored in association with the user ID and the place ID in the first storage unit, and store the input regarding the purchase in association with the place ID and the salesperson ID.

11. The server according to claim 10, wherein the server is configured to receive transmissions from the first mobile terminal and the second mobile terminal through a wireless network relay.

12. The server according to claim 10 or 11, further comprising:
a point of sales server configured to collect transaction data received from a point of sales terminal.

13. The server according to any one of claims 10 to 12, wherein the server is configured to transmit merchandise information associated with a particular merchandise code to at least one of the first mobile terminal and the second mobile terminal after the particular merchandise code is received from the at least one of the first mobile terminal and the second mobile terminal.

14. The server according to any one of claims 10 to 13, wherein the place ID, the user ID, the salesperson ID, the merchandise code, and the input regarding the purchase of the merchandise corresponding to the merchandise code are stored, along with date and time information, as a trial information record.

15. The server according to claim 14, wherein the trial information record includes a plurality of merchandise codes corresponding to each item tested by a user particularly associated with the user ID and the place ID and the date and time information included in the trial information record.
